# EUROPEAN PATENT SPECIFICATION

(11) **EP 3 367 416 B1**
(45) Date of publication and mention of the grant of the patent: **29.01.2020**
(21) Application number: 17192102.6
(22) Date of filing: 20.09.2017
(51) Int. Cl.: H01H 71/50, H01H 71/52

(54) **MOLDED-CASE CIRCUIT BREAKER WITH MAIN CONTACT INTERLOCK FEATURE**
SCHUTZSCHALTER MIT FORMGEHÄUSE MIT HAUPTKONTAKTVERRIEGELUNGSMERKMAL
DISJONCTEUR À BOÎTIER MOULÉ AVEC CARACTÉRISTIQUE DE VERROUILLAGE DE CONTACT PRINCIPAL

(30) Priority: 28.02.2017 KR 20170026641
(43) Date of publication of application: 29.08.2018
(73) Proprietor: LSIS Co., Ltd., Anyang-si, Gyeonggi-do 14119 (KR)
(72) Inventor: CHO, Seongyeol, Anyang-si, Gyeonggi-do 14118 (KR)
(74) Representative: K&L Gates LLP

(56) References cited:
- US-A1- 2007 215 577
- US-A1- 2009 039 988

## Description

### BACKGROUND OF THE INVENTION

### 1. Field of the Invention

The present invention relates to a molded-case circuit breaker with a main contact interlock feature, and more particularly, to a molded-case circuit breaker with a main contact interlock feature which prevents improper operation of a tripping mechanism that trips main contacts when the main contacts fuse together.

### 2. Description of the Conventional Art

In general, a molded-case circuit breaker (MCCB) is an electrical device that protects a circuit and a load by automatically interrupting the circuit when there is an electrical overload or short circuit. The circuit breaker typically includes a terminal portion provided on the front and rear and forming a circuit connection, a mechanism divided into a stationary contact and a movable contact and mechanically opening and closing a circuit, a trip portion detecting an overcurrent or short-circuit current in the circuit and causing the mechanism to trip, and an extinguisher for extinguishing an arc produced when interrupting a fault current.

In the circuit breaker, the mechanism requires a function for verifying main contact positions, in addition to its basic functions such as allowing and breaking current. Verification of main contact positions is for the purpose of allowing the user to recognize circuit conditions and preventing safety incidents by holding the handle of the mechanism in the input position to prevent it from moving to the off position when a movable contact and a fixed contact fuse together while current is applied (conducting state). This function of the circuit breaker which prevents the handle from moving to the off position is also called an "isolation feature".

The main contact position verification function may be implemented by blocking or tripping. In the blocking method, the handle is not moved to the off (interrupted) state even if the user exerts force to the handle to move it to the off position. On the other hand, in the tripping method, when the user operates the handle to move it to the off position, the mechanism is tripped so that the handle is held in the on state (or tripped state).

US2009/0039988 discloses a molded case circuit breaker having a contact on mechanism which can perform a trip operation and automatically rotates the handle to the on position or a position toward the on position if the handle is manipulated to move to the off (or reset) position in a state that the contacts are melt-adhered to each other, the contact on mechanism, including: a contact on plate which is vertically movable by being guided according to the operation of the switching mechanism, a trip bar that drives the restricting unit to a releasing position, a lever connected to the handle and that provides a pivot point of the handle, a lever pin fixed to the lever, for driving the restricting unit to the releasing position by pressing the trip bar, and thereby operating the switching mechanism to the trip position, and a trip spring providing an elastic driving force for enabling the switching mechanism to operate to the trip position when the restricting unit is moved to the releasing position.

US2007/0215577 discloses a mold cased circuit breaker that enables a user to easily discern an actually connected state between stationary contactors and movable contactors and forcibly separates a connection therebetween if there arises electrical fault, wherein the circuit breaker comprises: a first isolation link hinged at a lower end thereof to a shaft unit and selectively engaged at an upper end thereof with a lateral surface of a lever; a second isolation link centrally formed with an oblong hole for accommodating a guide pin protruded on a side plate and linked at one end thereof to an upper end of the first isolation link; and an isolation lever adjacently positioned at one end thereof to the other end of the second isolation link, and so positioned at the other end thereof as to selectively engage with a nail, and rotatably mounted at the side plate to rotate the nail by way of operation of the second isolation link.

Now, a description will be given of a molded-case circuit breaker that can maintain the main contact position verification function, reduce the number of parts, and improve improper operation of the tripping mechanism by using the tripping method.

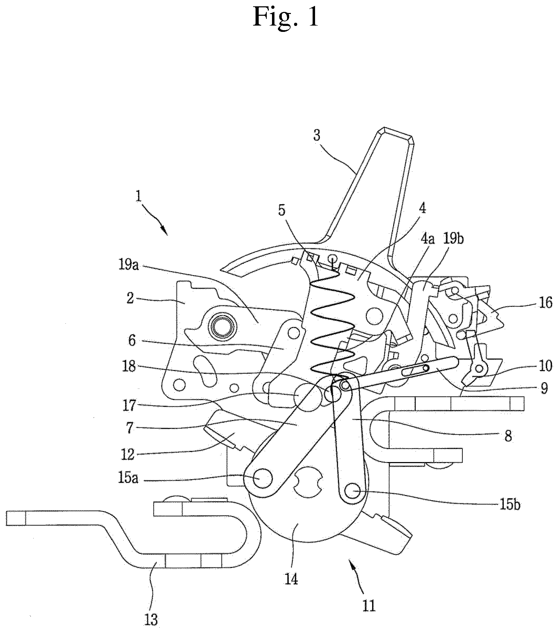

FIGS. 1 to 3 depict a switch mechanism of a molded-case circuit breaker according to the conventional art. The figures show the off state, on state, and fused state, respectively.

The switch mechanism 1 includes a switch lever 4 that is rotatably mounted on a lever shaft 17 mounted on a part of a side plate 2 and moves to the on, off, and tripped positions, a handle 3 that is attached to the switch lever 4 and applies manual operational force to it, an upper link 6 rotatably mounted on a latch 19a, a lower link 7 rotatably mounted on a first shaft pin 15a of a shaft 14, a link shaft 18 to which the upper link 6 and the lower link 7 are attached, and a main spring 5 that is attached to the link shaft 18 and provides elasticity.

When the user turns the handle 3 from the off state (interrupted state) to the on state, the link shaft 18 rotates counterclockwise by the force of the main spring 5 attached to the switch lever 4 and pulls the upper link 6 and the lower link 7 into the shape of a nearly-straight line and rotates the shaft 14. A movable contact 12 of a contact region 11 comes into contact with a fixed contact 13 and creates a conducting state (on state). The link shaft 18 is placed on the left of the lever shaft 17, and the switch lever 4 is locked in the on state. A transition from the on state to the off state occurs in the opposite way.

Meanwhile, a tripping mechanism for implementing the main contact position verification function is mounted on the right side of the mechanism. The tripping mechanism for implementing the main contact position verification function includes a first link 8 connected to a second shaft pin 15b, a second link 9 connected to a first link 8, a trip link 10 that rotates by the force of the second link 9, a nail 16, and a latch holder 19b. The second link 9 has a long hole along which a pin slides.

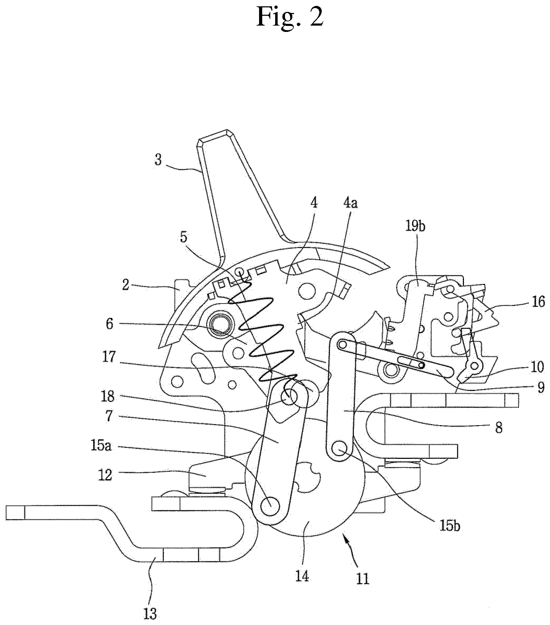

In the case of a normal interruption, the shaft 14 rotates, so the first link 8 connected to the second shaft pin 15b moves downward, thus keeping the trip link 10 from operating (see FIG. 2 and then FIG. 1). That is, in normal on and off actions, the first link 8 and the second link 9 move within a certain area and do not affect the trip link 10.

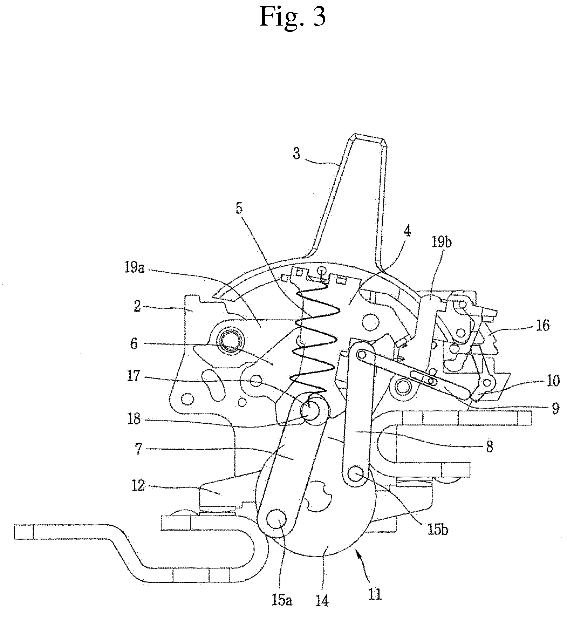

When the contacts fuse together as shown in FIG. 3, the shaft 14 does not rotate beyond a predetermined range. Thus, the first link 8 does not move downward but is pushed by a pressure portion 4a of the switch lever 4 and rotates clockwise and pushes the second link 9. Accordingly, the second link 9 rotates the trip link 10, and the trip link 10 rotates the nail 16, thereby releasing the latch holder 19b. The latch holder 19b releases the latch 19a, thereby tripping the switch mechanism 1.

Because the link shaft 18 of the tripped switch mechanism 1 is positioned more to the left than the lever shaft 17, the switch lever 4 is always in the on state (or tripped state). As such, the positions of the main contacts of the circuit breaker can be detected, and a fusion of the contacts can be detected.

However, in the conventional art, the tripping mechanism for verifying main contact positions includes a first link 8, a second link 9, and a trip link 10, and the first link 8 can move relatively freely. Therefore, there is a risk that, when the switch mechanism 1 performs an on operation, the second link 9 might be pushed by the collision of the first link 8 on it and touches the trip link 10, causing the switch mechanism 1 to trip.

### SUMMARY OF THE INVENTION

The present invention has been made in an effort to solve the above-described problems, and an aspect of the present invention is to provide a molded-case circuit breaker with a main contact interlock feature which prevents improper operation of a tripping mechanism that trips main contacts when the main contacts fuse together.

The present invention is defined by the features of the independent claim. Preferred beneficial embodiments thereof are defined by the sub-features of the dependent claims.

A molded-case circuit breaker with a main contact interlock feature according to an embodiment of the present invention has the advantage of preventing tripping caused by unintended rotation by means of a stopper on a trip lever.

Moreover, with a simple configuration made up of a shaft link and a trip lever, an interlock feature (isolation feature) is enabled in a stable manner when contacts fuse together, which helps enhance product reliability. Therefore, higher productivity and higher durability can be achieved.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIGS. 1 to 3 depict a switch mechanism of a molded-case circuit breaker according to the conventional art, which show the off state, on state, and fused state, respectively;
FIG. 4 depicts a partial perspective view of a molded-case circuit breaker according to an embodiment of the present invention;
FIGS. 5 to 8 depict vertical cross-sectional views of a switch mechanism of a molded-case circuit breaker according to an embodiment of the present invention, which show the off state, on state, fused state before operation, and fused state after operation, respectively; and
FIGS. 9A, 9B, and 10 depict front views of a shaft link and a trip lever that are applied to a molded-case circuit breaker according to an embodiment of the present invention.

### DETAILED DESCRIPTION OF THE PREFERRED EMBODIMENTS

While the invention has been shown and described with respect to the preferred embodiments, it will be understood by those skilled in the art that various changes and modifications may be made without departing from the spirit and scope of the invention as defined in the following claims.

A molded-case circuit breaker with a main contact position interlock feature according to embodiments of the present invention will be described in detail with reference to the drawings.

A molded-case circuit breaker with a main contact position interlock feature according to an embodiment of the present invention includes: a handle 20 that transfers the user's operational force; a switch lever 22 rotatably mounted on a side plate 21 and connected to the handle 20, with a pressure portion 22a formed on a part of it; a shaft link 30, one end of which is rotatably mounted on a shaft pin 27b, that has a contact region 30a on the top; a trip lever 31 rotatably mounted on the side plate 21, one end of which is slidably connected to the shaft link 30, and the other end of which is connected to a nail 32 of a tripping mechanism, wherein, if the pressure portion 22a makes contact with the contact region 30a, the trip lever 31 rotates the nail 32.

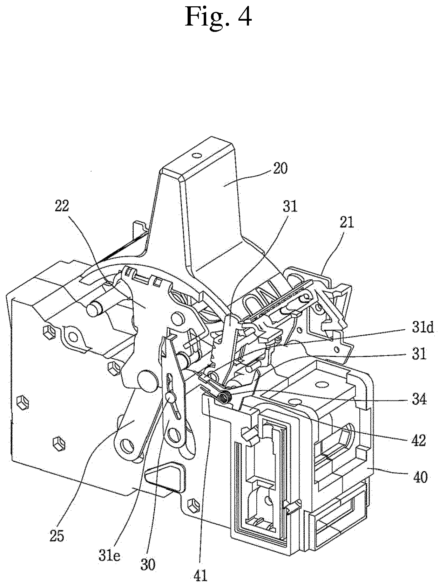

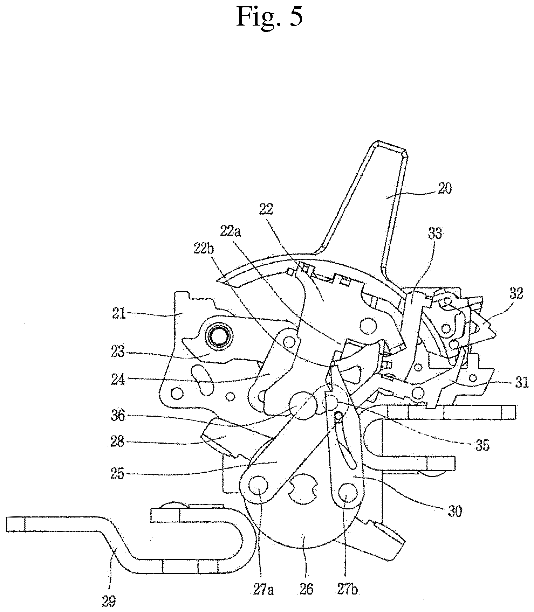

FIG. 4 depicts a partial perspective view of a molded-case circuit breaker according to an embodiment of the present invention. FIGS. 5 to 8 depict vertical cross-sectional views of a switch mechanism of a molded-case circuit breaker according to an embodiment of the present invention. The figures show the off state, on state, fused state before operation, and fused state after operation, respectively.

The contact part includes a movable contact 28, a fixed contact 29, and a shaft 26. The movable contact 28 is mounted on the shaft 26 and rotates with the rotation of the shaft 26. The shaft 26 has a pair of shaft pins 27a and 27b. The pair of shaft pins 27a and 27b serve to transfer the actuating force of the switch mechanism to the shaft 26. A lower link 25 is mounted on any one 27a of the pair of shaft pins 27a and 27b to transfer switching power, and a shaft link 30 is mounted on the other shaft pin 27b to perform an interlock feature (isolation feature) when the main contacts fuse together.

The switch mechanism includes a toggle link mechanism and a release mechanism that are mounted on a pair of side plates 21. The toggle link mechanism includes a handle 20, a switch lever 22 that is connected to the handle 20 and can be turned to the on or off position, and an upper link 24 and a lower link 25 that are connected by a link shaft 35. The upper link 24 is rotatably mounted on a lath 23, and the lower link 25 is rotatably mounted on any one shaft pin 27a.

A pressure portion 22a and a link receiving portion 22b are formed on one side of the switch lever 22. The pressure portion 22a may protrude, and the link receiving portion 22b may be recessed.

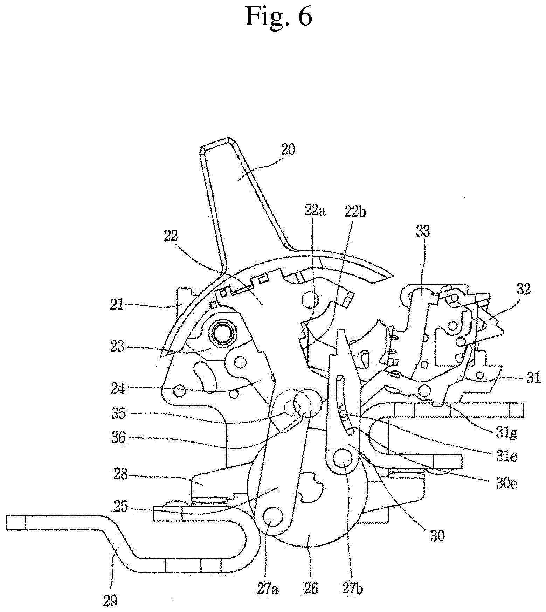

When the user pushes the handle 20 to the on position (see FIG. 6), a main spring (not shown) attached to the link shaft 35 pulls the link shaft 35 to the left of a lever shaft 36, and the upper link 24 and the lower link 25 are straightened into a nearly-straight line. This rotates the shaft 26 counterclockwise and brings the movable contact 28 into contact with the fixed contact 29, thereby allowing current to be carried to the circuit.

On the contrary, when the user pushes the handle 20 to the off position (see FIG. 5), the main spring (not shown) pulls the link shaft 35 to the right of the lever shaft 36. Then, the upper link 24 and the lower link 25 rotate the shaft 26 clockwise as they are bent in an L-shape, and the movable contact 28 is detached from the fixed contact 29, thereby causing the circuit to trip.

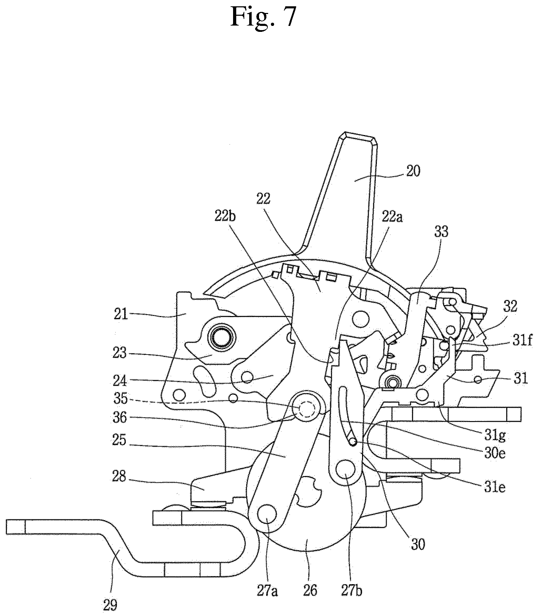

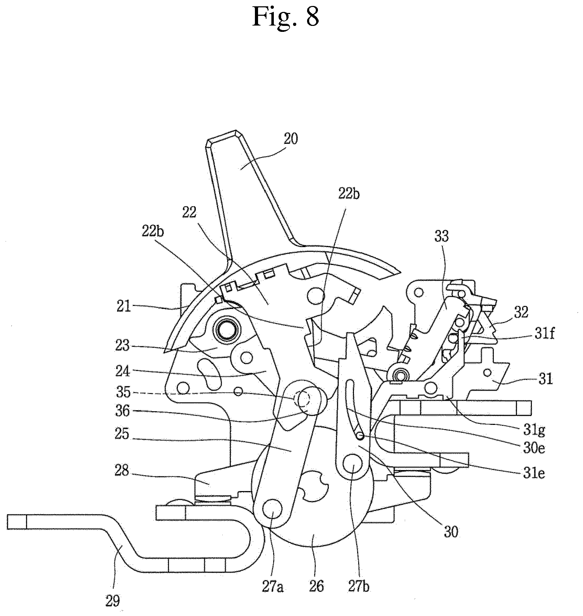

The tripping mechanism includes a nail 32 rotatably mounted on one side of the switch mechanism, a latch holder 33 restrained by the nail 32, and a latch 23 restrained by the latch holder 33. As for a trip operation (see FIGS. 7 and 8), when the nail 32 rotates clockwise, the latch holder 33 is released and rotates clockwise. Thus, the latch 23 is released and the latch 23 rotates counterclockwise, and therefore the upper link 24 is pulled, thereby moving the link shaft 35 to the left of the lever shaft 36.

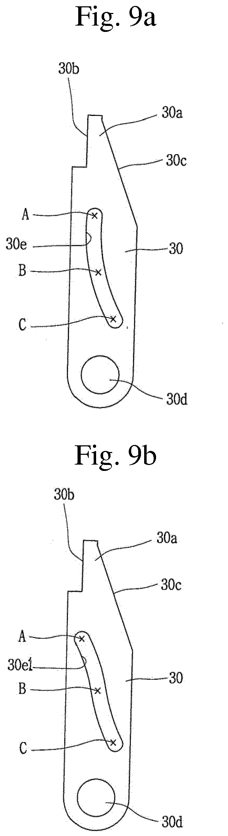

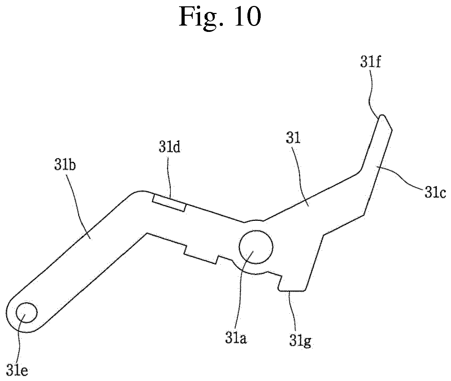

FIGS. 9A, 9B, and 10 depict front views of a shaft link and a trip lever that are applied to a molded-case circuit breaker according to an embodiment of the present invention. An interlock device for verifying main contact positions that is applied to the circuit breaker according to an embodiment of the present invention includes a shaft link and a trip lever.

The shaft link 30 may be formed from a long, flat plate. The contact region 30a protrudes from the top end of the shaft link 30. A contact surface 30b is formed in the shape of a straight line on one side of the contact region 30a. A sloping surface 30c may be formed on the other side of the contact region 30a. The contact surface 30b is a surface with which the pressure portion 22a of the switch lever 22 makes contact and on which force is exerted.

A coupling hole 30d is formed at the lower end of the shaft link 30 so as to be rotatably attached to the shaft pin 27b. The shaft link 30 may rotate about the coupling hole 30d.

An arc-like slit 30e is formed at the center of the shaft link 30. The slit 30e provides a curved path to which one end (a protrusion 31e) of the trip lever 31 is slidably attached. It is assumed that a point on the upper end of the slit 30e is A, the point at the center of the slit 30e where the protrusion 31e is in the on position is B, and a point on the lower end of the slit 30e is C. Also, it is assumed that the part from A to B is a first part AB and the part from B to C is a second part BC. The embodiment of FIG. 9A illustrates that both the first part AB and second part BC of the slit 30e1 bulge toward the left. The embodiment of FIG. 9B illustrates that the first part AB of the slit 30e1 bulges toward the right and the second part BC bulges toward the left.

Preferably, in the on state, the second part BC corresponds to a cylindrical surface around which the protrusion 31e rotates. Also, it is preferable that the second part BC slopes at an angle less than 45 degrees with respect to the contact surface 30b. Thus, when the switch lever 22 applies force towards the right, the protrusion 31e is pushed away.

The trip lever 31 is rotatably mounted on a side plate 21. The trip lever 31 may have the shape of two arms that extend to both sides of a rotating shaft hole 31a. The rotating shaft hole 31a may be formed at the center of the trip lever 31 and rotatably mounted on the side plate 21 or a base mold 40.

A first arm 31b is formed at one side of the trip lever 31, and a second arm 31c is formed at the other side. The first arm 31b and the second arm 31c may be bent in opposite directions.

A spring support 31d protrudes from the first arm 31b. The spring support 31d supports one end of a torsion spring 34 (see FIG. 4). The torsion spring 34 is mounted around the rotating shaft hole 31a, with one end being supported on the spring support 31d, and the other end being supported on a first supporting piece 41 of the base mold 40. Accordingly, the trip lever 31 receives a clockwise torque.

The protrusion 31e to be slidably inserted into the slit 30e of the shaft link 30 is formed at the end of the first arm 31b. The protrusion 31e may slide along the slit 30e.

A nail pressure portion 31f is formed at the end of the second arm 31c. The nail pressure portion 31f is mounted in such a way that it makes contact with the nail 32. A stopper 31g protrudes from the second arm 31c. The stopper 31g is supported on a second supporting piece 42 of the base mold 40 and serves to keep the trip lever 31 from rotating any further.

The first supporting piece 41 and the second supporting piece 42 protrude from the base mold 40. The first supporting piece 41 supports the other end of the torsion spring 34, and the second supporting piece 42 supports the stopper 31g of the trip lever 31. Since the trip lever 31 is supported by the stopper 31g, improper operation of the tripping mechanism is prevented even if a switching impact is generated.

Referring to FIGS. 5 to 8, operation of a molded-case circuit breaker with an isolation feature according to an embodiment of the present invention will be described.

When the user pushes the handle 20 from the on state to the off position as shown in FIG. 6 (when the user rotates the handle 20 in the clockwise direction shown in the figure), the main spring (not shown) pulls the link shaft 35 to the right of the lever shaft 36. Then, the upper link 24 and the lower link 25 rotate the shaft 26 clockwise as they are bent in an L-shape, and the movable contact 28 is detached from the fixed contact 29, thereby causing the circuit to trip (see FIG. 5). In this case, the shaft link 30 moves downwards along the shaft 26. Since the protrusion 31e of the trip lever 31 is stuck in the slit 30e of the shaft link 30, the shaft link 30 moves along a certain trajectory. In the off position, the shaft link 30 is inserted into the link receiving portion 22b of the switch lever 22. However, the shaft link 30 does not make contact with the link receiving portion 22b. In normal on and off actions, the trip lever 31 does not move. Moreover, in normal on and off actions, the protrusion 31e of the trip lever 31 moves in the first part AB of the slit 30e.

In a case where the contacts fuse together as shown in FIG. 7, if the user pushes the handle 20 to the off position, the shaft 26 does not rotate and therefore the shaft link 30 does not move downward. The pressure portion 22a of the switch lever 22 touches the contact surface 30b of the shaft link 30 and pushes the shaft link 30. As the shaft link 30 rotates, the protrusion 31e of the trip lever 31 is pushed by the slit 30e and rotates counterclockwise. As the trip lever 31 rotates, the nail pressure portion 31f pushes the nail 32, thereby releasing the latch holder 33. In conjunction with this, the latch 23 is released from the latch holder 33, causing the switch mechanism to trip. When the contacts fuse together, the protrusion 31e of the trip lever 31 moves in the second part BC of the slit 30e..

A molded-case circuit breaker with a main contact interlock feature according to an embodiment of the present invention has the advantage of preventing tripping caused by unintended rotation by means of a stopper on a trip lever.

Moreover, with a simple configuration made up of a shaft link and a trip lever, an interlock feature (isolation feature) is enabled in a stable manner when contacts fuse together, which helps enhance product reliability. Therefore, higher productivity and higher durability can be achieved.

## Claims

1. A molded-case circuit breaker with a main contact position interlock feature, the circuit breaker comprising:
a handle (20) that transfers the user's operational force;
a switch lever (22) rotatably mounted on a side plate (21) and connected to the handle (20), with a pressure portion (22a) formed on a part of it;
a contact part including a movable contact (28), a fixed contact (29), and a shaft (26), wherein the movable contact (28) is mounted on the shaft (26) and rotates with the rotation of the shaft (26) and wherein the shaft (26) has a pair of shaft pins (27a and 27b);
an upper link (24) and a lower link (25) connected by a link shaft (35), wherein the upper link (24) is rotatably mounted on a latch (23), and the lower link (25) is rotatably mounted on one of the pair of shaft pins (27a and 27b);
a shaft link (30), one end of which is rotatably mounted on the other one of the pair of shaft pins (27a and 27b);
a trip lever (31) rotatably mounted on the side plate (21), one end of which is slidably connected to the shaft link (30), and the other end of which is connected to a nail (32) of a tripping mechanism,
wherein, if the pressure portion (22a) makes contact with the contact region (30a), the trip lever (31) rotates the nail (32),
wherein an arc-like slit (30e) is formed through the shaft link (30), and a protrusion (31e) is formed at one end of the trip lever (31) to be slidably inserted into the arc-like slit (30e), and
wherein the protrusion (31e) makes contact at an upper end point (A) of the arc-like slit (30e) when in an off state,
**characterized in that**
the contact region (30a) is on the top of the shaft link;
wherein the slit (30e) is divided into a first part (AB) extending from the upper end point (A) to a point (B) where the protrusion (31e) is in the on state and a second part (BC) extending from the point (B) where the protrusion (31e) is in the on state to a lower end point (C),
wherein when the movable contact (28) and the fixed contact (29) fuse together, the protrusion (31e) of the trip lever (31) moves in the second part (BC) of the arc-like slit (30e), and the protrusion (31e) makes contact with the lower end point (C).

2. The circuit breaker of claim 1, wherein the second part (BC) slopes at an angle less than 45 degrees with respect to a contact surface (30b) where the contact region (30a) makes contact with the pressure portion (22a).

3. The circuit breaker of claim 2, wherein the first part (AB) bulges toward the left or right, and the second part (BC) bulges toward the left.

4. The circuit breaker of one of claims 1 to 3, wherein the trip lever (31) has a rotating shaft hole (31a) at the center, with a first arm (31b) at one side and a second arm (31c) at the other side.

5. The circuit breaker of one of claims 1 to 4, wherein the trip lever (31) has a torsion spring (34) that exerts a clockwise torque on the trip lever (31).

6. The circuit breaker of claim 5, wherein the first arm (31b) has a spring support (31d) that supports one end of the torsion spring (34).

7. The circuit breaker of one of claims 4-6, wherein a supporting piece (42) is formed on a part of a base mold (40), and the second arm (31c) has a stopper (31g) that makes contact with the supporting piece (42).

## Patentansprüche

1. Ein Schutzschalter im Formgehäuse mit einer Hauptkontaktpositionsverriegelungsfunktion, der Schutzschalter umfassend:
einen Griff (20), der die Betätigungskraft des Benutzers überträgt;
einen Schalthebel (22), der drehbar auf einer Seitenplatte (21) montiert und mit dem Griff (20) verbunden ist, mit einem Druckabschnitt (22a), der an einem Teil davon ausgebildet ist;
ein Kontaktteil, das einen beweglichen Kontakt (28), einen festen Kontakt (29) und eine Welle (26) beinhaltet, wobei der bewegliche Kontakt (28) auf der Welle (26) montiert ist und sich mit der Drehung der Welle (26) dreht und wobei die Welle (26) ein Paar Wellenzapfen (27a und 27b) aufweist;
einen Oberlenker (24) und einen Unterlenker (25), die durch eine Gelenkwelle (35) verbunden sind, wobei der Oberlenker (24) drehbar an einer Verriegelung (23) und der Unterlenker (25) drehbar an einem der beiden Wellenzapfen (27a und 27b) gelagert ist;
eine Wellenverbindung (30), deren eines Ende drehbar auf dem anderen des Wellenzapfenpaares (27a und 27b) gelagert ist;
einen Auslösehebel (31), der drehbar auf der Seitenplatte (21) montiert ist, dessen eines Ende gleitend mit der Wellenverbindung (30) und dessen anderes Ende mit einem Nagel (32) eines Auslösemechanismus verbunden ist,
wobei
wenn der Druckabschnitt (22a) mit dem Kontaktbereich (30a) in Kontakt kommt, der Auslösehebel (31) den Nagel (32) dreht,
wobei ein bogenförmiger Schlitz (30e) durch die Wellenverbindung (30) gebildet ist, und ein Vorsprung (31e) an einem Ende des Auslösehebels (31) gebildet ist, der gleitend in den bogenförmigen Schlitz (30e) eingeführt werden kann, und
wobei der Vorsprung (31e) an einem oberen Endpunkt (A) des bogenförmigen Schlitzes (30e) in einem Aus-Zustand in Kontakt kommt,
**dadurch gekennzeichnet, dass**
der Kontaktbereich (30a) sich auf der Oberseite der Wellenverbindung befindet;
wobei der Schlitz (30e) unterteilt ist in einen ersten Teil (AB), der sich vom oberen Endpunkt (A) zu einem Punkt (B) erstreckt, an dem sich der Vorsprung (31e) im Ein-Zustand befindet, und einen zweiten Teil (BC), der sich von dem Punkt (B), an dem sich der Vorsprung (31e) im Ein-Zustand befindet, zu einem unteren Endpunkt (C) erstreckt,
wobei, wenn der bewegliche Kontakt (28) und der feste Kontakt (29) miteinander verschmelzen, sich der Vorsprung (31e) des Auslösehebels (31) im zweiten Teil (BC) des bogenförmigen Schlitzes (30e) bewegt und der Vorsprung (31e) Kontakt mit dem unteren Endpunkt (C) herstellt.

2. Schutzschalter nach Anspruch 1, wobei der zweite Teil (BC) in einem Winkel von weniger als 45 Grad in Bezug auf eine Kontaktfläche (30b) geneigt ist, wobei der Kontaktbereich (30a) mit dem Druckabschnitt (22a) in Kontakt kommt.

3. Schutzschalter nach Anspruch 2, wobei sich der erste Teil (AB) nach links oder rechts und der zweite Teil (BC) sich nach links wölbt.

4. Schutzschalter nach einem der Ansprüche 1 bis 3, wobei der Auslösehebel (31) in der Mitte ein drehendes Wellenloch (31a) aufweist, mit einem ersten Arm (31b) auf der einen Seite und einem zweiten Arm (31c) auf der anderen Seite.

5. Schutzschalter nach einem der Ansprüche 1 bis 4, wobei der Auslösehebel (31) eine Torsionsfeder (34) aufweist, die ein Rechtsdrehmoment auf den Auslösehebel (31) ausübt.

6. Schutzschalter nach Anspruch 5, wobei der erste Arm (31b) eine Federstütze (31d) aufweist, die ein Ende der Torsionsfeder (34) trägt.

7. Schutzschalter nach einem der Ansprüche 4-6, wobei ein Stützstück (42) an einem Teil einer Basisform (40) ausgebildet ist und der zweite Arm (31c) einen Anschlag (31g) aufweist, der mit dem Stützstück (42) in Kontakt kommt.

## Revendications

1. Disjoncteur à boîtier moulé avec caractéristique de verrouillage de position de contact principal, le disjoncteur comprenant :
une poignée (20) qui transfère la force opérationnelle de l'utilisateur ;
un levier de commutateur (22) monté en rotation sur une plaque latérale (21) et raccordé à la poignée (20), avec une portion de pression (22a) formée sur une partie de celui-ci ;
une partie de contact comprenant un contact mobile (28), un contact fixe (29) et un arbre (26), dans lequel le contact mobile (28) est monté sur l'arbre (26) et tourne avec la rotation de l'arbre (26) et dans lequel l'arbre (26) a une paire de goupilles d'arbre (27a et 27b) ;
une liaison supérieure (24) et une liaison inférieure (25) raccordées par un arbre de liaison (35), dans lequel la liaison supérieure (24) est montée en rotation sur un loquet (23) et la liaison inférieure (25) est montée en rotation sur l'une de la paire de goupilles d'arbre (27a et 27b) ;
une liaison d'arbre (30), dont une extrémité est montée en rotation sur l'autre de la paire de goupilles d'arbre (27a et 27b) ;
un levier de déclenchement (31) monté en rotation sur la plaque latérale (21), dont une extrémité est raccordée en coulissement à la liaison d'arbre (30) et l'autre extrémité est raccordée à une pointe (32) d'un mécanisme déclencheur,
dans lequel, si la partie de pression (22a) établit un contact avec la région de contact (30a), le levier de déclenchement (31) fait tourner la pointe (32),
dans lequel une fente en arc (30e) est formée à travers la liaison d'arbre (30), et une saillie (31e) est formée à une extrémité du levier de déclenchement (31) pour être insérée en coulissement dans la fente en arc (30e), et
dans lequel la saille (31e) établit un contact avec un point d'extrémité supérieure (A) de la fente en arc (30e) lorsqu'elle est dans un état à l'arrêt,
**caractérisé en ce que**
la région de contact (30a) se trouve au sommet de la liaison d'arbre ;
dans lequel la fente (30e) est divisée en une première partie (AB) s'étendant du point d'extrémité supérieure (A) à un point (B) où la saillie (31e) est dans l'état de marche et une seconde partie (BC) s'étendant du point (B) où la saillie (31e) est dans l'état de marche et un point d'extrémité inférieure (C),
dans lequel lorsque le contact mobile (28) et le contact fixe (29) fusionnent, la saillie (31e) du levier de déclenchement (31) se déplace dans la seconde partie (BC) de la fente en arc (30e), et la saillie (31e) établit un contact avec le point d'extrémité inférieure (C).

2. Disjoncteur selon la revendication 1, dans lequel la seconde partie (BC) est inclinée selon un angle inférieur à 45 degrés par rapport à une surface de contact (30b) où la région de contact (30a) établit un contact avec la portion de pression (22a).

3. Disjoncteur selon la revendication 2, dans lequel la première partie (AB) fait un renflement vers la gauche ou la droite, et la seconde partie (BC) fait un renflement vers la gauche.

4. Disjoncteur selon l'une quelconque des revendications 1 à 3, dans lequel le levier de déclenchement (31) a un trou d'arbre rotatif (31a) au centre, avec un premier bras (31b) au niveau d'un côté et un second bras (31c) au niveau de l'autre côté.

5. Disjoncteur selon l'une quelconque des revendications 1 à 4, dans lequel le levier de déclenchement (31) a un ressort de torsion (34) qui exerce un couple dans le sens des aiguilles d'une montre sur le levier de déclenchement (31).

6. Disjoncteur selon la revendication 5, dans lequel le premier bras (31b) a un support de ressort (31d) qui supporte une extrémité du ressort de torsion (34).

7. Disjoncteur selon l'une quelconque des revendications 4 à 6, dans lequel une pièce de support (42) est formée sur une partie d'un moule de base (40), et le second bras (31c) a une butée (31g) qui établit un contact avec la pièce de support (42).
